# EUROPEAN PATENT SPECIFICATION

(11) **EP 4 361 073 B1**
(45) Date of publication and mention of the grant of the patent: **03.12.2025**
(21) Application number: 22890204.5
(22) Date of filing: 13.10.2022
(51) Int. Cl.: B65H 23/34, B65H 23/26, B65H 23/025, H01M 10/04, H01M 10/0587, B65H 27/00

(54) **ROLLER FOR SUPPORTING MATERIAL**
ROLLE ZUR AUFNAHME VON MATERIALIEN
ROULEAU DE SUPPORT DE MATÉRIAUX

(30) Priority: 03.11.2021 KR 20210149599
(43) Date of publication of application: 01.05.2024
(73) Proprietor: LG Energy Solution, Ltd., Seoul 07335 (KR)
(72) Inventor: KIM, Kisu, Daejeon 34122 (KR); NA, Seyong, Daejeon 34122 (KR); PARK, Sungmin, Daejeon 34122 (KR); LEE, Jin Soo, Daejeon 34122 (KR); OH, Jung Su, Daejeon 34122 (KR); YOON, Seongwon, Daejeon 34122 (KR)
(74) Representative: Plasseraud IP
(86) International application number: PCT/KR2022/015444
(87) International publication number: WO 2023/080469

(56) References cited:
- CN-A- 108 946 038
- US-A- 3 392 431
- US-A- 4 253 392
- US-A- 5 522 785
- US-A- 5 522 785
- US-A1- 2001 002 381
- US-A1- 2015 210 497
- US-B1- 6 524 227

## Description

### [Technical Field]

The present invention relates to a roller for supporting a material, and more specifically, to a roller for supporting a material of a thin film.

### [Background Art]

As technology development and demand for mobile devices increase, demand for a secondary battery as an energy source is rapidly increasing. In particular, the secondary battery is attracting much attention as an energy source not only for a mobile device such as a mobile phone, a digital camera, a laptop computer, a wearable device, or the like, but also for a power device such as an electric bicycle, an electric vehicle, a hybrid electric vehicle, or the like.

The secondary battery may be formed by inserting an electrode assembly including a positive electrode, a negative electrode, and a separator in a case and then sealing the case. For example, the positive electrode, the negative electrode, and the separator are manufactured through a roll-to-roll manufacturing process using their own thin materials.

The thin film material is usually formed in a form of a sheet during the manufacturing process, the sheet is supported by a roller, and the roller needs to support the thin film material so that deformation such as a wrinkle does not occur in the thin film material during the manufacturing process.

This demand is also applied to another material (e.g., a film or a PET film) that is manufactured into a product desired by a consumer using a roll-to-roll method. Document US 5 522 785 defines a roller for supporting a web material comprising a pipe, a shaft and a deforming part installed on the shaft, wherein an inclined portion connected to the deforming part bends the pipe.

### [Disclosure]

### [Technical Problem]

An object to be solved by the present invention is to provide a roller for supporting a material capable of preventing an error phenomenon such as a wrinkle in the material while supporting the material during a manufacturing process.

A problem to be solved by the present invention is not limited to the above-described problem, and problems not mentioned will be clearly understood by a person of ordinary skill in the art from the present specification and the accompanying drawings.

### [Technical Solution]

The invention is as defined by the appended claims.

A roller for supporting a material according to the present invention includes: a rotation shaft; a pipe having a space in which the rotation shaft is inserted; a deforming part that is connected to the rotation shaft and the pipe to deform the pipe; and a support part that is installed at the pipe to support the material. The deforming part includes: a thread portion provided on the rotation shaft; a nut part screwed to the thread portion; an inclined part that is disposed at an inner surface of the pipe and that is pressed by the nut part according to rotation of the rotation shaft; and a driving source that is connected to the rotation shaft to rotate the rotation shaft.

The thread portion includes a left thread portion and a right thread portion, the nut part may be provided as a pair of nut parts disposed at an arbitrary interval at the left thread portion and the right thread portion, and the inclined part may be provided as a pair of inclined parts to correspond to the pair of nut parts, respectively.

The pair of nut parts are connected to a guide shaft disposed parallel to the rotation shaft.

The pair of inclined parts may have a shape that becomes inclined from a periphery portion of the pipe to a center portion of the pipe.

In addition, the pair of inclined parts may have a shape that becomes thick from the periphery portion of the pipe to the center portion of the pipe.

The pair of nut parts may move from the periphery portion of the pipe to the center portion of the pipe according to the rotation of the rotation shaft to press the inclined part.

The pipe may be convexly deformed by pressurization of the inclined part in a direction in which the inclined part is positioned.

The support part may include a bobbin coupled to a bearing installed at the pipe, and the bobbin may be installed in a plurality at the pipe.

The material may be an electrode or a separator of a secondary battery.

### [Advantageous Effects]

According to embodiments, a roller can be varied and a degree of variation is also adjustable.

Accordingly, the roller according to an embodiment may flexibly support a material according to a characteristic of the material to be supported, and the material may be manufactured as a quality product while preventing an abnormality such as a wrinkle during a manufacturing process.

An effect of the present invention is not limited to the above-described effects, and effects not mentioned will be clearly understood by a person of ordinary skill in the art from the present specification and the accompanying drawings.

### [Description of the Drawings]

FIG. 1 is a plan view illustrating a roller according to an embodiment of the present invention.
FIG. 2 is a perspective view illustrating the roller according to an embodiment of the present invention.
FIG. 3 is an exploded perspective view illustrating the roller of FIG. 2.
FIG. 4 is a partially cut-away perspective view of the roller of FIG. 2.
FIGS. 5A and 5B are views illustrating an operation state of the roller according to an embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention as defined within the appended claims.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thickness of layers, films, panels, regions, etc., are exaggerated for clarity. In the drawings, for convenience of description, the thickness of layers, films, panels, areas, etc., are exaggerated.

Unless explicitly described to the contrary, the word "comprise" and variations such as "comprises" or "comprising" will be understood to imply the inclusion of stated elements but not the exclusion of any other elements.

The phrase "in a plan view" or "on a plane" means viewing a target portion from the top, and the phrase "in a cross-sectional view" or "on a cross-section" means viewing a cross-section formed by vertically cutting a target portion from the side.

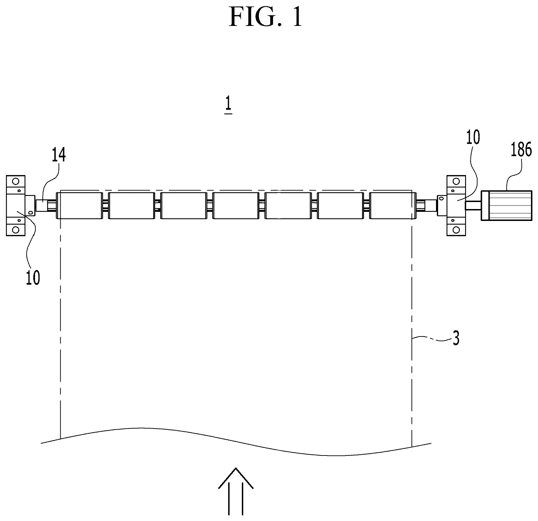

FIG. 1 is a plan view illustrating a roller 1 for supporting a material according to an embodiment of the present invention. The roller 1 is disposed at one side of the material 3 (for example, below the material 3) conveyed (transferred) along one direction (e.g., a direction of an arrow in FIG. 1) to support the material 3.

The roller 1 according to the embodiment is varied so that it is configured to support the material 3. For example, the roller 1 is configured to adjust a degree of variation according to a characteristic of the material 3. For example, the material 3 may be an electrode or a separator for an electrode assembly of a secondary battery, but the material of the present invention is not limited thereto.

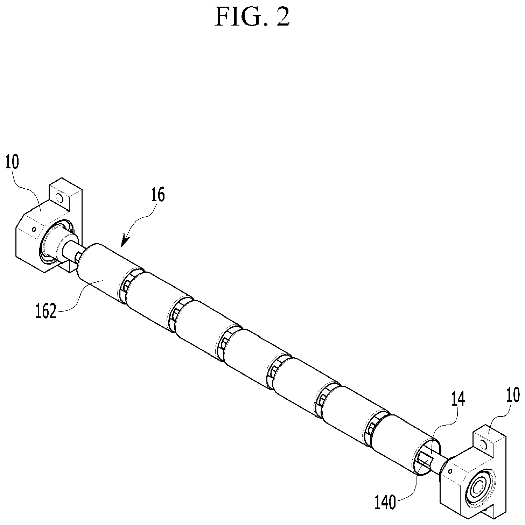

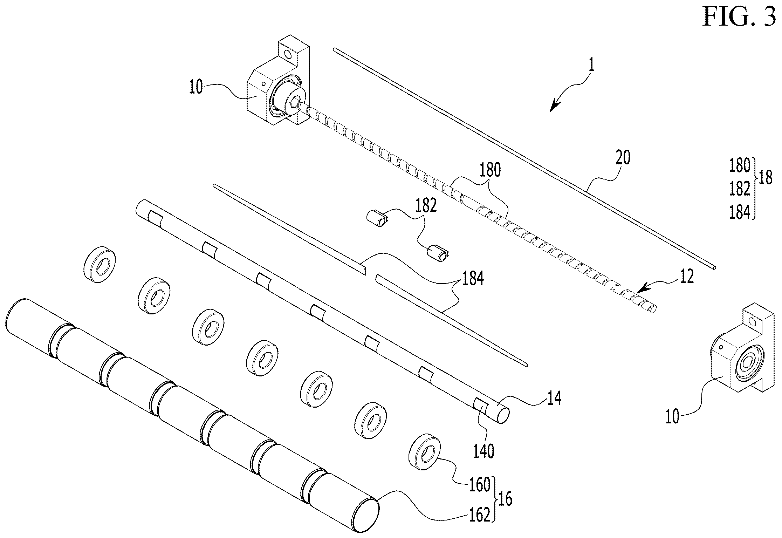

FIG. 2 is a perspective view illustrating the roller 1 according to an embodiment of the present invention, and FIG. 3 is an exploded perspective view of the roller 1.

As shown in FIGS. 2 and 3, the roller 1 includes a rotation shaft 12 that is rotatably installed at both of holders 10 disposed at regular intervals and a cylindrical pipe 14 disposed at the outside of the rotation shaft 12 while surrounding the rotation shaft.

The pipe 14 may have a space for inserting the rotation shaft 12 and both ends of the pipe 14 may be fixed to the holders 10. In a state where the rotation shaft 12 is inserted in an inner space of the pipe 14, a predetermined interval is set between an inner circumferential surface of the pipe 14 and an outer circumferential surface of the rotation shaft 12, and incisions 140 of a predetermined size may be disposed at equal intervals along a length direction of the pipe 14.

In addition, the roller 1 according to the embodiment includes a support part 16 installed at the pipe 14 to support the material 3 and a deforming part 18 connected to the rotation shaft 12 and the pipe 14 to deform the pipe 14.

In the present embodiment, the support part 16 includes a bobbin 162 that is coupled to a bearing 160 installed at the pipe 14 so that it can be rotated. A plurality of bobbins 162 (for example, seven bobbins) may be installed at the pipe 14.

The deforming part 18 includes a thread portion 180 provided on the rotation shaft 12 and a nut part 182 that is screwed to the thread portion 180 so that it can be moved along a length direction of the rotation shaft 12 according to rotation of the rotation shaft 12.

In the present embodiment, the thread portion 180 includes left and right thread portions, and the nut part 182 includes a pair of nut parts respectively screwed to the left thread portion and the right thread portion. The pair of nut parts 182 may move toward a center portion of the rotation shaft 12 when the rotation shaft 12 rotates in one direction, and the pair of nut parts 182 may move toward a periphery portion of the rotation shaft 12 when the rotation shaft rotates in a direction opposite to the one direction.

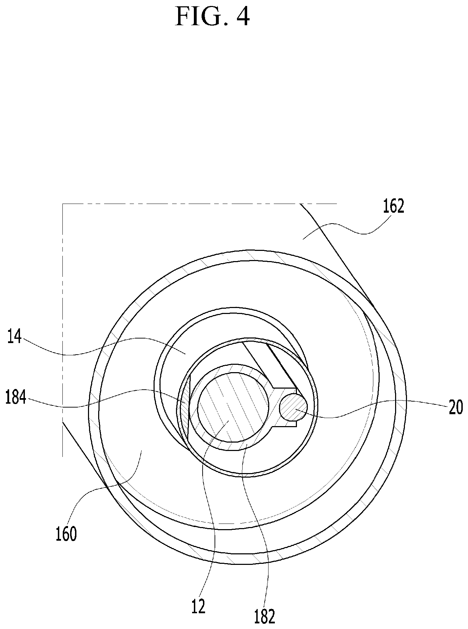

Referring to FIG. 4, the nut parts 182 may be connected to a guide shaft 20 having both ends respectively fixed to the holder 10 so that the nut parts performs the above movement while being guided by the guide shaft 20.

In addition, the deforming part 18 includes an inclined part 184 disposed at an inner surface of the pipe 14 and a driving source 186 (e.g., a driving motor of FIG. 1) connected to the rotation shaft 12 to drive the rotation shaft 12.

In the present embodiment, the inclined part 184 may be provided as a pair to correspond to the nut portion 182, and the pair of inclined parts may be fixedly installed at an inner surface of the pipe 14 at an arbitrary interval. One surface (e.g., a surface facing the nut part) of the inclined part 184 may be flat, while the other surface (e.g., a surface facing the inner surface of the pipe) facing the one surface may be curved according to an inner curvature of the pipe 14.

The inclined part 184 may have a shape in which its thickness and width decrease from one end to the other end. When the inclined part 184 is disposed on the inner surface of the pipe 14, for example, a thickness of the inclined part 184 becomes thick from a periphery portion of the pipe 14 to a center portion of the pipe 14. Thus, the inclined part 184 becomes inclined from the periphery portion of the pipe 14 to the center portion of the pipe 14.

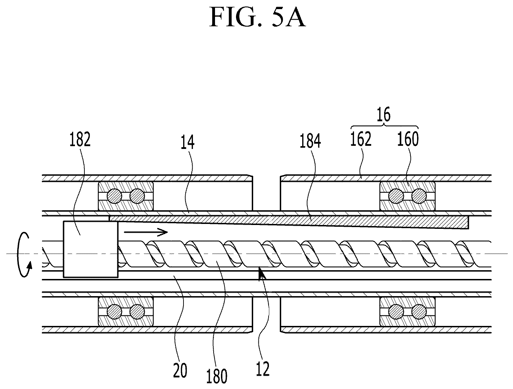

Accordingly, when the rotation shaft 12 is rotated by the driving motor that is the driving source 186 in a state shown in FIG. 5A, the pair of nut parts 182 may respectively move to the center portion of the rotation shaft 12 due to a screw coupling relationship with the left and right thread portions 180 to contact the inclined part 184 so that the pair of nut parts 182 press the inclined part 184.

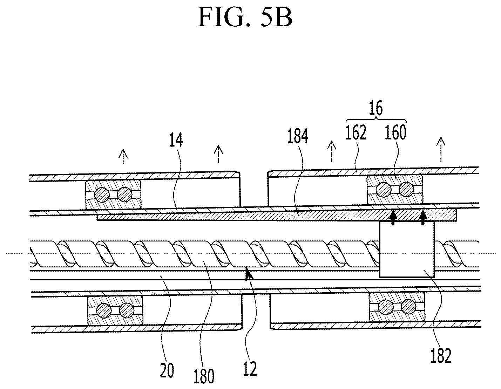

When the inclined part 184 is pressed, the inclined part 184 is pushed to the outside of the pipe 14 so that the pipe 14 is deformed. As a result, the pipe 14 is convexly deformed in a direction in which the inclined part 184 is disposed. By this deformation, the bobbin 162, which is the support part 16, may also be deformed from its initial position so that the bobbin gives more tension to the material 3 supported by the bobbin. For example, as shown in FIG. 5B, as the nut part 182 moves toward a center (a right side of FIG. 5B), the pipe 14 may be deformed to become convex to one side (an upper side of FIG. 5B). Accordingly, a degree of tension may increase as the nut part 182 moves closer to the center portion of the pipe 14.

Thus, the roller 1 according to the present embodiment may adjust the degree of tension applied to the material 3 by the support part 16 by deforming the pipe 14 using the deforming part 18 as necessary during a manufacturing process.

Therefore, in a process in which the roller 1 according to the present embodiment is applied, the material 3 may be supported by adjusting a tension to match a characteristic of the material 3 according to a property of the material 3. Thus, a defect phenomenon such as a wrinkle may be prevented so that the material 3 is manufactured as a product of good quality.

### <Description of symbols>

- 1:: roller
- 12:: rotation shaft
- 14:: pipe
- 16:: support part
- 18:: deforming part
- 20:: guide shaft
- 160:: bearing
- 162:: bobbin
- 180:: thread portion
- 182:: nut part
- 184:: inclined part
- 186:: driving source

## Claims

1. A roller (1) for supporting a material (3), comprising:
a rotation shaft (12);
a pipe (14) having a space in which the rotation shaft (12) is inserted;
a deforming part (18) that is connected to the rotation shaft (12) and the pipe (14) to deform the pipe (14); and
a support part (16) that is installed at the pipe (14) to support the material (3),
wherein the deforming part (18) comprises:
a thread portion (180) provided on the rotation shaft (12);
a nut part (182) screwed to the thread portion (180);
an inclined part (184) that is disposed at an inner surface of the pipe (14) and that is pressed by the nut part (182) according to rotation of the rotation shaft (12); and
a driving source (186) that is connected to the rotation shaft (12) to rotate the rotation shaft (12),
**characterized in that** the thread portion (180) includes a left thread portion and a right thread portion, the nut part (182) is provided as a pair of nut parts (182) disposed at an arbitrary interval at the left thread portion and the right thread portion, and the inclined part (184) is provided as a pair of inclined parts (184) to correspond to the pair of nut parts (182), respectively, and
and **in that** the pair of nut parts (182) are connected to a guide shaft (20) disposed parallel to the rotation shaft (12).

2. The roller (1) of claim 1, wherein the pair of inclined parts (184) become inclined from a periphery portion of the pipe (14) to a center portion of the pipe (14).

3. The roller (1) of claim 2, wherein the pair of inclined parts (184) become thick from the periphery portion of the pipe (14) to the center portion of the pipe (14).

4. The roller (1) of claim 3, wherein the pair of nut parts (182) move from the periphery portion of the pipe (14) to the center portion of the pipe (14) according to the rotation of the rotation shaft (12) to press the inclined part (184).

5. The roller (1) of claim 4, wherein the pipe (14) is convexly deformed by pressurization of the inclined part (184) in a direction in which the inclined part (184) is positioned.

6. The roller (1) of claim 1, wherein the support part (16) includes a bobbin (162) coupled to a bearing (160) installed at the pipe (14).

7. The roller (1) of claim 6, wherein the bobbin (162) is installed in a plurality at the pipe (14).

8. The roller (1) of claim 1, wherein the material (3) is an electrode or a separator of a secondary battery.

## Patentansprüche

1. Rolle (1) zum Tragen eines Materials (3), umfassend:
eine Rotationswelle (12);
ein Rohr (14), welches einen Raum aufweist, in welchem die Rotationswelle (12) eingesetzt ist;
einen Verformungsteil (18), welcher mit der Rotationswelle (12) und dem Rohr (14) verbunden ist, um das Rohr (14) zu verformen; und
einen Trageteil (16), welcher an dem Rohr (14) installiert ist, um das Material (3) zu tragen,
wobei der Verformungsteil (18) umfasst:
einen Gewindeabschnitt (180), welcher an der Rotationswelle (12) bereitgestellt ist;
einen Mutternteil (182), welcher an den Gewindeabschnitt (180) geschraubt ist;
einen geneigten Teil (184), welcher an einer inneren Fläche des Rohrs (14) angeordnet ist, und welcher durch den Mutternteil (182) gemäß einer Rotation der Rotationswelle (12) gepresst wird; und
eine Antriebsquelle (186), welche mit der Rotationswelle (12) verbunden ist, um die Rotationswelle (12) zu rotieren,
**dadurch gekennzeichnet, dass** der Gewindeabschnitt (180) einen linken Gewindeabschnitt und einen rechten Gewindeabschnitt umfasst, der Mutternteil (182) als ein Paar von Mutternteilen (182) bereitgestellt ist, welche bei einem beliebigen Intervall an dem linken Gewindeabschnitt und dem rechten Gewindeabschnitt angeordnet sind, und der geneigte Teil (184) als ein Paar von geneigten Teilen (184) bereitgestellt ist, um jeweils dem Paar von Mutternteilen (182) zu entsprechen, und
dass das Paar von Mutternteilen (182) mit einer Führungswelle (20) verbunden sind, welche parallel zu der Rotationswelle (12) angeordnet ist.

2. Rolle (1) nach Anspruch 1, wobei das Paar von geneigten Teilen (184) von einem Umfangsabschnitt des Rohrs (14) zu einem zentralen Abschnitt des Rohrs (14) geneigt werden.

3. Rolle (1) nach Anspruch 2, wobei das Paar von geneigten Teilen (184) von dem Umfangsabschnitt des Rohrs (14) zu dem zentralen Abschnitt des Rohrs (14) dick werden.

4. Rolle (1) nach Anspruch 3, wobei sich das Paar von Mutternteilen (182) von dem Umfangsabschnitt des Rohrs (14) zu dem zentralen Abschnitt des Rohrs (14) gemäß der Rotation der Rotationswelle (12) bewegen, um den geneigten Teil (184) zu pressen.

5. Rolle (1) nach Anspruch 4, wobei das Rohr (14) durch Unter-Druck-Setzen des geneigten Teils (184) in einer Richtung konvex verformt ist, in welcher der geneigte Teil (184) positioniert ist.

6. Rolle (1) nach Anspruch 1, wobei der Trageteil (16) eine Spule (162) umfasst, welche mit einem Lager (160) gekoppelt ist, welches an dem Rohr (14) installiert ist.

7. Rolle (1) nach Anspruch 6, wobei die Spule (162) in einer Mehrzahl an dem Rohr (14) installiert ist.

8. Rolle (1) nach Anspruch 1, wobei das Material (3) eine Elektrode oder ein Separator einer Sekundärbatterie ist.

## Revendications

1. Rouleau (1) de support d'un matériau (3), comprenant :
un arbre rotatif (12) ;
un tube (14) présentant un espace dans lequel l'arbre rotatif (12) est inséré ;
une partie de déformation (18) qui est reliée à l'arbre rotatif (12) et au tube (14) pour déformer le tube (14) ; et
une partie de support (16) qui est installée au niveau du tube (14) pour supporter le matériau (3),
dans lequel la partie de déformation (18) comprend :
une partie filetée (180) prévue sur l'arbre rotatif (12) ;
une partie écrou (182) vissée sur la partie filetée (180) ;
une partie inclinée (184) qui est disposée au niveau d'une surface interne du tube (14) et qui est comprimée par la partie écrou (182) en fonction de la rotation de l'arbre rotatif (12) ; et
une source d'entraînement (186) qui est reliée à l'arbre rotatif (12) pour faire tourner l'arbre rotatif (12),
**caractérisé en ce que** la partie filetée (180) comporte une partie filetée gauche et une partie filetée droite, la partie écrou (182) se présente sous la forme d'une paire de parties écrou (182) disposées à un intervalle arbitraire au niveau de la partie filetée gauche et de la partie filetée droite, et la partie inclinée (184) se présente sous la forme d'une paire de parties inclinées (184) destinée à correspondre à la paire de parties écrou (182), respectivement, et
et **en ce que** la paire de parties écrou (182) est reliée à un arbre de guidage (20) disposé parallèlement à l'arbre rotatif (12).

2. Rouleau (1) selon la revendication 1, dans lequel la paire de parties inclinées (184) devient inclinée d'une partie périphérique du tube (14) à une partie centrale du tube (14).

3. Rouleau (1) selon la revendication 2, dans lequel la paire de parties inclinées (184) devient épaisse de la partie périphérique du tube (14) à la partie centrale du tube (14).

4. Rouleau (1) selon la revendication 3, dans lequel la paire de parties écrou (182) se déplace de la partie périphérique du tube (14) vers la partie centrale du tube (14) en fonction de la rotation de l'arbre rotatif (12) pour comprimer la partie inclinée (184).

5. Rouleau (1) selon la revendication 4, dans lequel le tube (14) est déformé de manière convexe par mise sous pression de la partie inclinée (184) dans une direction dans laquelle est positionnée la partie inclinée (184).

6. Rouleau (1) selon la revendication 1, dans lequel la partie de support (16) comporte une bobine (162) accouplée à un palier (160) installé au niveau du tube (14).

7. Rouleau (1) selon la revendication 6, dans lequel la bobine (162) est installée en une pluralité au niveau du tube (14).

8. Rouleau (1) selon la revendication 1, dans lequel le matériau (3) est une électrode ou un séparateur d'une batterie secondaire.
